# EUROPEAN PATENT APPLICATION

(11) **EP 3 505 743 A1**
(43) Date of publication of application: **03.07.2019**
(21) Application number: 18001009.2
(22) Date of filing: 28.12.2018
(51) Int. Cl.: F02D 29/02, F02N 11/08, B60W 30/188

(54) **SYSTEM AND METHOD FOR CONTROLLING ENGINE FOR INDUSTRIAL VEHICLE**

(30) Priority: 29.12.2017 KR 20170183414
(71) Applicant: Doosan Corporation, Seoul 04563 (KR)
(72) Inventor: KIM, Dongyae, 21562 Incheon (KR)
(74) Representative: Isarpatent

(57) **Abstract**

According to a system and a method for controlling an engine for an industrial vehicle according to an exemplary embodiment of the present specification, a control unit acquires state information of the industrial vehicle, accurately determines a state of the industrial vehicle based on the acquired state information, and controls whether to start or stop the engine in an idle state.

## Description

### CROSS-REFERENCE TO RELATED APPLICATIONS

This application claims benefit and priority to Korean Patent Application No. 10-2017-0183414, filed on December 29, 2017 with the Korean Intellectual Property Office, the disclosure of which is incorporated herein in its entirety by reference.

### TECHNICAL FIELD

The present disclosure relates to a system and a method for controlling an engine in an idle state based on state information of an industrial vehicle.

### BACKGROUND

Recently, as distribution of goods is increased and heavy items are often carried in a workplace, an industrial vehicle such as a forklift is widely used. In the case of work that uses the industrial vehicle such as the forklift, the industrial vehicle often carries heavy items, and a safety accident often occurs due to a lack of careful attention to the work. In particular, because a deadly accident may result from a travel problem or an erroneous travel of the forklift that often carries items while traveling, very careful attention is needed.

Regarding a system for controlling an engine for an industrial vehicle in the related art, a technology has been known which maintains a rotational speed of the engine in a predetermined idle state, when the industrial vehicle does not perform work, in order to reduce fuel consumption, the amount of carbon dioxide, and noise.

There is a need for a technology that selectively performs stopping or restarting of the engine depending on the state of the operation in the idle state.

### SUMMARY

The present disclosure has been made in an effort to provide a system and a method for controlling an engine, which accurately determine a state of an industrial vehicle and then control whether to start or stop the engine in the idle state.

An exemplary embodiment of the present disclosure provides a system for controlling an engine for an industrial vehicle, the system including: an engine; a controller which acquires state information of the industrial vehicle while maintaining the engine in an idle state, determines whether a pre-stored engine stop condition or a pre-stored engine driving condition is satisfied based on the state information, and generates an engine stop signal or an engine driving signal based on a determination result; and an engine control unit (ECU) which controls the engine based on the engine stop signal or the engine driving signal, in which the state information of the industrial vehicle includes steering operation information, working machine operation information, brake on/off information, and parking switch on/off information.

The engine stop condition may include a first condition which satisfies a state in which a working machine does not operate, a brake is in an ON state, and an output of a steering system is not changed, or a second condition which satisfies a state in which a parking switch is turned on, and the working machine does not operate.

The engine driving condition may include a condition in which a change in one or more states of an operation state of the working machine, an operation state of the brake, and an operation state of a steering sensor is detected within a predetermined time after the engine stop signal is generated.

The system for controlling the engine for an industrial vehicle according to the exemplary embodiment of the present disclosure may further include: a steering sensor which provides the steering operation information; an actuator pressure sensor which provides the working machine operation information; a brake pedal sensor which provides the brake on/off information; and a parking switch which provides the parking switch on/off information.

The system for controlling the engine for an industrial vehicle may include an actuator angle sensor which provides the working machine operation information instead of the actuator pressure sensor which provides the working machine operation information.

The industrial vehicle may be a forklift, and the actuator may be a working machine.

Another exemplary embodiment of the present disclosure provides a method of controlling an engine, the method comprising: maintaining the engine in an idle state by performing an idle stop and go (ISG) function; acquiring state information of the industrial vehicle; determining whether a pre-stored engine stop condition or a pre-stored engine driving condition is satisfied based on the state information; generating an engine stop signal or an engine driving signal based on a determine result; and controlling the engine based on the engine stop signal or the engine driving signal, in which the state information of the industrial vehicle includes steering operation information, working machine operation information, brake on/off information, and parking switch on/off information.

According to the exemplary embodiment of the present disclosure, it is possible to accurately determine an operation state including a working state and a traveling state of the industrial vehicle and then stop the engine in the idle state of the engine or restart the engine after the engine is stopped.

It is possible to provide the system and the method for controlling the engine which are capable of improving work efficiency by allowing an operator to concentrate only on work with an easy mind.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE DRAWINGS

FIG. 1 is a block diagram schematically illustrating a configuration of an engine control system according to an exemplary embodiment of the present specification.
FIG. 2 is a view schematically illustrating a forklift according to the exemplary embodiment of the present specification.
FIG. 3 is a detailed block diagram of a control unit in FIG. 1.
FIG. 4 is a flowchart for explaining an engine control method according to the exemplary embodiment of the present specification.
FIG. 5 is an exemplified view illustrating an engine control state according to the exemplary embodiment of the present specification.

### DETAILED DESCRIPTION

In the following detailed description, reference is made to the accompanying drawing, which forms a part hereof. The illustrative embodiments described in the detailed description, drawing, and claims are not meant to be limiting. Other embodiments may be utilized, and other changes may be made, without departing from the spirit or scope of the subject matter presented here.

It should be noted that technical terms used in the present specification are used to just describe a specific exemplary embodiment and do not intend to limit the present disclosure. Further, unless the technical terms used in the present specification are particularly defined as other meanings in the present specification, the technical terms should be interpreted as meanings generally appreciated by those skilled in the art and should not be interpreted as excessively comprehensive meanings or excessively reduced meanings. Further, when the technical term used in the present specification is a wrong technical term that does not accurately express the spirit of the present disclosure, the technical term should be understood by being substituted by a technical term which can be correctly understood by those skilled in the art. In addition, a general term used in the present disclosure should be interpreted as defined in a dictionary or contextually, and should not be interpreted as an excessively reduced meaning.

Singular expressions used in the present specification include plural expressions unless clearly described as different meanings in the context. It should not be interpreted that the terms "comprises," "comprising," "includes" and/or "including," used herein necessarily include all of the several constituent elements or several steps disclosed in the present specification, and it should be interpreted that the terms do not include some of the constituent elements or steps and may further include additional constituent elements or steps.

The terms including ordinal numbers such as "first" and "second" used in the present specification may be used to describe various constituent elements, but the constituent elements should not be limited by the terms. These terms are used only to distinguish one constituent element from another constituent element. For example, a first constituent element may be named a second constituent element, and similarly, the second constituent element may also be named the first constituent element, without departing from the scope of the present disclosure.

In the description of the present disclosure, the specific descriptions of publicly known related technologies will be omitted when it is determined that the specific descriptions may obscure the subject matter of the present disclosure. In addition, it should be noted that the accompanying drawings are provided only to allow those skilled in the art to easily understand the spirit of the present disclosure, and the spirit of the present disclosure should not be interpreted as being limited by the accompanying drawings.

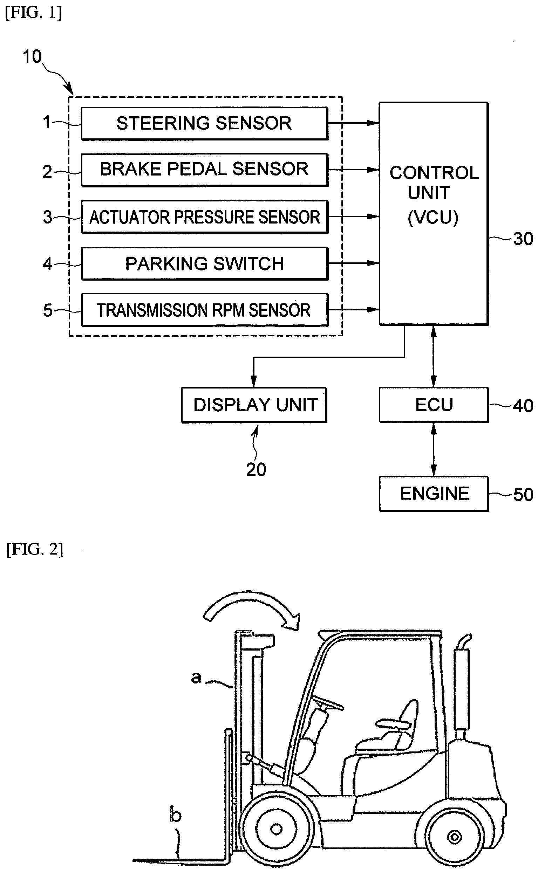

Hereinafter, a system and a method for controlling an engine for an industrial vehicle according to the present disclosure will be described below with reference to FIGS. 1 to 5.

FIG. 1 is a block diagram schematically illustrating a configuration of an engine control system according to an exemplary embodiment of the present specification, and FIG. 2 is a view illustrating a forklift according to the exemplary embodiment of the present specification. A forklift is an industrial vehicle for unloading items and has a fork b which is installed at a front side of the industrial vehicle and is movable upward or downward along a mast a.

It is not easy to just apply an idle control method for a general vehicle to the industrial vehicle such as the forklift. In the case of the general vehicle, it is possible to start or stop(Auto stop) an engine in an idle state by checking only an operation state of a brake or an accelerator. However, the industrial vehicle performs the process of unloading items not only in a state in which the industrial vehicle travels but also in a state in which the industrial vehicle is stopped. The industrial vehicle sometimes continues to perform work even in a state in which the industrial vehicle is stably stopped on the slope by using a parking brake for convenience of work.

As illustrated in FIG. 1, an engine control system according to an exemplary embodiment of the present specification includes a steering sensor 1, a brake pedal sensor 2, an actuator pressure sensor 3, a parking switch 4, a transmission RPM sensor 5, a control unit 30, an ECU 40, and an engine 50. The engine control system may further include a display unit 20.

For convenience of description, the steering sensor 1, the brake pedal sensor 2, the actuator pressure sensor 3, and the parking switch 4 are referred to as a state information providing unit 10.

The steering sensor 1 detects a change in motion of a steering wheel or a steering joystick and generates a signal when the change in motion is detected. The steering sensor 1 may be a pressure sensor or an angle sensor. The steering sensor 1 transmits the generated signal to the control unit 30.

That is, based on the signal of the steering sensor 1, the control unit 30 acquires steering information.

The brake pedal means a pedal used to decelerate the vehicle.

The brake pedal sensor 2 may be configured in the form of a sensor installed in the vicinity of the brake pedal to monitor whether the brake pedal is manipulated, or the brake pedal sensor 2 may be configured in the form of a sensor installed in the vicinity of a brake to monitor an operation of the brake.

The brake pedal sensor 2 monitors a change in motion of the brake pedal and generates a signal when the change in motion is detected. The brake pedal sensor 2 transmits the generated signal to the control unit 30.

That is, based on the signal of the brake pedal sensor 2, the control unit 30 acquires brake on/off operation information related to whether the brake is turned on or off.

The actuator pressure sensor 3 detects a change in pressure of an actuator (e.g., working machines (A and B in FIG. 2) of a forklift) and generates a signal when the change in pressure is detected. The actuator pressure sensor 3 transmits the generated signal to the control unit 30.

As another modified example, a position sensor or an angle sensor may be substituted for the actuator pressure sensor 3. For example, in the case of the forklift, the position sensor or the angle sensor may be provided on the mast (A in FIG. 2).

That is, based on the signal of the actuator pressure sensor 3, the control unit 30 acquires working machine operation information related to whether the working machine operates.

The parking switch 4 generates a selection signal for parking when the parking switch is turned on by being manipulated by the user. The parking switch 4 transmits the generated signal to the control unit 30.

The transmission RPM sensor 5 is a sensor capable of checking a rotational speed of a transmission. The transmission RPM sensor 5 checks transmission RPM, generates a signal corresponding to the transmission RPM, and outputs the generated signal to the control unit 30.

The control unit 30 is electrically connected to the state information providing unit 10 and the ECU 40. In addition, the control unit 30 acquires state information of the industrial vehicle while maintaining the engine in the idle state.

Based on the acquired state information, the control unit 30 determines whether a pre-stored engine stop condition or a pre-stored engine driving condition is satisfied, and the control unit 30 generates an engine stop signal or an engine driving signal based on the determination result. Consequently, the control unit 30 checks the operation state of the industrial vehicle and controls whether to start or stop the engine in the idle state.

The ECU 40 receives the engine stop signal or the engine driving signal of the control unit 30 and controls an on/off (start) operation of an engine 60 based on the received signal.

The display unit 50 may display confirmation information to confirm whether to start or stop the engine based on the state information of the industrial vehicle or the determination of the control unit 30.

For example, the display unit 50 may be an instrument panel.

Another modified example may further include an alarm sound generating device or a buzzer (not illustrated). In the case in which the alarm sound generating device or the buzzer is included, sound information related to the confirmation information may be outputted together with the display of the confirmation information on the display unit 50 to confirm whether to start or stop the engine.

Therefore, before the engine is stopped contrary to the operator's intention, the operator may prevent the engine from being stopped and continue to perform work.

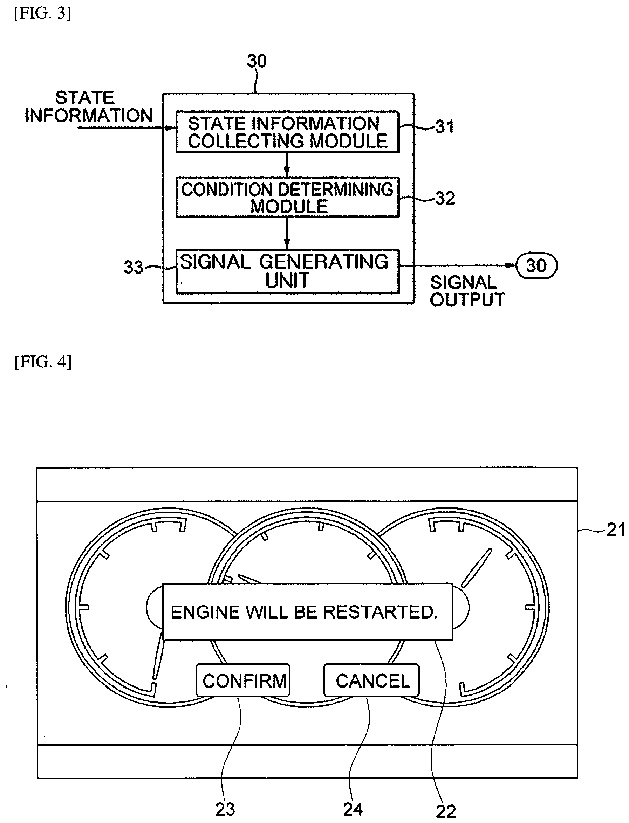

FIG. 3 is a detailed block diagram of the control unit 30 in FIG. 1.

As illustrated in FIG. 3, the control unit 30 includes a state information collecting module 31, a condition determining module 32, and a signal generating unit 33.

The state information collecting module 31 acquires state information from the respective units which are electrically connected to the control unit 30 and provide information about the operation state of the industrial vehicle. The state information includes steering operation information, working machine operation information, brake on/off information, and parking switch on/off information.

Based on the collected state information, the condition determining module 32 determines whether the pre-stored engine stop condition or the pre-stored engine driving condition is satisfied.

The engine stop condition includes a first condition which satisfies a state in which the working machine does not operate, the transmission RPM is 0, the brake is in the ON state, and the output of the steering system is not changed, or a second condition which satisfies a state in which the parking switch is turned on, the transmission RPM is 0, and the working machine does not operate.

The engine driving condition includes a third condition in which a change in one or more states of the operation state of the working machine, the off operation state of the brake, the operation state of the steering sensor is detected within a predetermined first time after the engine stop signal is generated.

The predetermined first time may be, but not limited to, about 5 minutes and may be variously set.

As another modified example, the third condition may further include a condition in which a change in transmission RPM is detected.

Based on the determination result of the condition determining module 32, the signal generating unit 33 generates the engine stop signal or the engine driving signal. The signal generating unit 33 outputs the generated engine stop signal or the generated engine driving signal to the ECU 40.

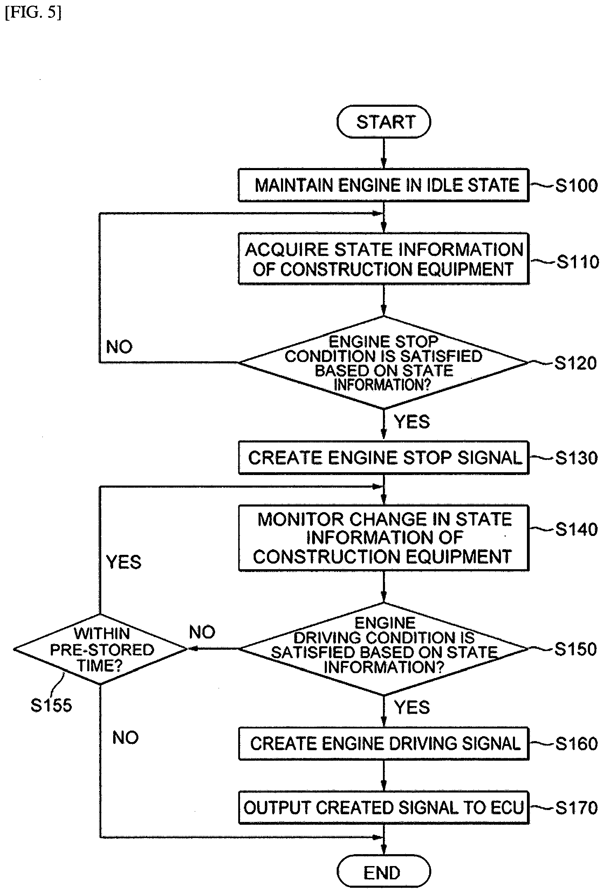

FIG. 4 is a flowchart for explaining an engine control method according to the exemplary embodiment of the present specification, and FIG. 5 is an exemplified view illustrating an engine control state according to the exemplary embodiment of the present specification.

The control unit 30 performs an engine idle function and controls the ECU 40 to maintain the engine in the idle state (S100).

The control unit 30 acquires the state information of the industrial vehicle from the state information providing unit 10 connected to the control unit 30 (S110).

Based on the state information, the control unit 30 determines whether the current state of the industrial vehicle satisfies the pre-stored engine stop condition (S120).

The engine stop condition includes the first condition which satisfies the state in which the working machine does not operate, the brake is in the ON state, and the output of the steering system is not changed, or the second condition which satisfies the state in which the parking switch is turned on and the working machine does not operate.

When the control unit 30 determines that the current state of the industrial vehicle satisfies the pre-stored engine stop condition, the control unit 30 generates the engine stop signal and transmits the generated engine stop signal to the ECU 40.

The ECU 40 stops the engine based on the engine stop signal received from the control unit 30.

When the control unit 30 determines at step S120 that the current state of the industrial vehicle does not satisfy the engine stop condition, the process goes back to step S110, and the control unit 30 continues to acquire the state information of the industrial vehicle.

The control unit 30 continues to acquire the state information of the industrial vehicle even after the engine is stopped, and the control unit 30 monitors whether the state information is changed after the engine is stopped (S140).

When the state information is changed after the engine is stopped, the control unit 30 determines whether the current state of the industrial vehicle satisfies the engine driving condition (S150).

The engine driving condition includes a condition in which a change in one or more states of the operation state of the working machine, the operation state of the brake, and the operation state of the steering sensor is detected within the predetermined time after the engine stop signal is generated.

When the control unit 30 determines that the current state of the industrial vehicle satisfies the pre-stored engine driving condition, the control unit 30 generates the engine driving signal (S160).

The control unit 30 outputs the generated engine driving signal to the ECU 40 (S170).

When the control unit 30 determines at step S150 that the state information does not satisfy the engine driving condition, the control unit 30 checks whether a predetermined time has elapsed after the engine stop signal is generated, by using an embedded timer (S155).

In a case in which the predetermined time has elapsed after the engine stop signal is generated, the engine control system is terminated in the state in which the engine is stopped.

In a case in which the predetermined time has not elapsed after the engine stop signal is generated, at step S155, the process goes back to step S140, and the control unit 30 continues to monitor the change in state information of the industrial vehicle.

As another modified example, as illustrated in FIG. 5, the control unit 30 outputs a message 22, which notifies the fact that the engine is stopped or operates, onto a display screen 21 of the display unit before the control unit 30 outputs the engine stop signal or the engine driving signal.

The message may be provided together with a confirmation icon 23 and a cancellation icon 24. The operator may prevent the transmission of the engine driving signal through the cancellation icon 23 provided together with the message 22 that notifies the fact that the engine operates.

The aforementioned step of receiving confirmation from the operator through the display screen 21 may be added or removed by a designer, and may be set to be selected by the operator.

However, by performing the step of receiving the confirmation from the operator through the display screen 21, it is possible to prevent the engine from being stopped and operating contrary to the operator's intention.

From the foregoing, it will be appreciated that various embodiments of the present disclosure have been described herein for purposes of illustration, and that various modifications may be made without departing from the scope and spirit of the present disclosure. Accordingly, the various embodiments disclosed herein are not intended to be limiting, with the true scope and spirit being indicated by the following claims.

## Claims

1. A system for controlling an engine for an industrial vehicle, the system comprising:
an engine;
a controller which acquires state information of the industrial vehicle while maintaining the engine in an idle state by performing an engine idle function, generates; and
an engine control unit (ECU) which controls the engine based on a engine stop signal or a engine driving signal received from the controller,
wherein the controller determines whether a pre-stored engine stop condition or a pre-stored engine driving condition is satisfied based on the state information, and the generates the engine stop signal or the engine driving signal based on a determination result,
wherein the state information of the industrial vehicle includes steering operation information, transmission RPM information, working machine operation information, brake on/off information, and parking switch on/off information.

2. The system of claim 1, wherein the engine stop condition includes a first condition which satisfies a state in which a working machine does not operate, a transmission RPM is 0, a brake is in an ON state, and an output of a steering system is not changed, or a second condition which satisfies a state in which a parking switch is turned on, the transmission RPM is 0, and the working machine does not operate.

3. The system of claim 2, wherein the engine driving condition includes a condition in which a change in one or more states of an operation state of the working machine, an operation state of the brake, and an operation state of a steering sensor is detected within a predetermined time after the engine stop signal is generated.

4. The system of claim 1, further comprising:
a steering sensor which provides the steering operation information;
at least one of a actuator pressure sensor or a actuator angle sensor which provides the working machine operation information;
a brake pedal sensor which provides the brake on/off information; and
a parking switch which provides the parking switch on/off information.

5. The system of claim 1, wherein the industrial vehicle is a forklift.

6. A method of controlling an engine for an industrial vehicle, the method comprising:
maintaining the engine in an idle state;
acquiring state information of the industrial vehicle;
determining whether a pre-stored engine stop condition or a pre-stored engine driving condition is satisfied based on the state information;
generating an engine stop signal or an engine driving signal based on a determine result; and
controlling the engine based on the engine stop signal or the engine driving signal,
wherein the state information of the industrial vehicle includes steering operation information, transmission RPM information, working machine operation information, brake on/off information, and parking switch on/off information.

7. The method of claim 6, wherein the engine stop condition includes a first condition which satisfies a state in which a working machine does not operate, a transmission RPM is 0, a brake is in an ON state, and an output of a steering system is not changed, or a second condition which satisfies a state in which a parking switch is turned on, the transmission RPM is 0, and the working machine does not operate.

8. The method of claim 7, wherein the engine driving condition includes a condition in which a change in one or more states of an operation state of the working machine, an operation state of the brake, and an operation state of a steering sensor is detected within a predetermined time after the engine stop signal is generated.
